# EUROPÄISCHE PATENTSCHRIFT

(11) **EP 1 951 400 B1**
(45) Veröffentlichungstag und Bekanntmachung des Hinweises auf die Patenterteilung: **09.10.2013**
(21) Anmeldenummer: 06762792.7
(22) Anmeldetag: 25.07.2006
(51) Int. Cl.: B01D 35/18, B60H 1/32, F28F 9/00, F28F 9/02, F28F 19/01

(54) **KÜHLVORRICHTUNG MIT FILTEREINHEIT**
COOLING DEVICE WITH A FILTER UNIT
DISPOSITIF DE REFROIDISSEMENT A UNITE DE FILTRATION

(30) Priorität: 17.11.2005 DE 102005054755
(43) Veröffentlichungstag der Anmeldung: 06.08.2008
(73) Patentinhaber: Hydac Fluidtechnik GmbH, 66280 Sulzbach/Saar (DE)
(72) Erfinder: ZEOLLA, Giuseppe, 6648 Muralto/TI (CH)
(74) Vertreter: Bartels, Martin Erich Arthur
(86) Internationale Anmeldenummer: PCT/EP2006/007296
(87) Internationale Veröffentlichungsnummer: WO 2007/073780

(56) Entgegenhaltungen:
- EP-A- 1 386 653
- EP-A1- 0 928 709
- WO-A-00/25071
- WO-A1-94/23257
- WO-A2-2004/090452
- DE-A1- 2 626 770
- DE-A1- 10 009 864
- DE-A1- 10 010 534
- DE-A1- 10 338 527
- FR-A1- 2 852 678
- US-A- 5 628 206
- US-A- 5 901 573
- US-B1- 6 694 773

## Beschreibung

Die Erfindung betrifft eine Kühlvorrichtung mit einer von einem zu kühlenden Fluid, insbesondere Hydrauliköl, durchströmbaren Kühleinheit und mit einer Filtereinheit für die Filtration des Fluids, wobei die Filtereinheit sich an einer Längsseite der Kühleinheit erstreckt und zwischen Filtereinheit und Kühleinheit ist ein Fluid-Sammelraum angeordnet.

Dahingehende Kühlvorrichtungen (US-A-4 295 964, CH 533 246 A) sind für eine Vielzahl von Anwendungsfällen einsetzbar und in den verschiedensten Ausführungsformen erhältlich. Die bisher auf dem Markt frei erhältlichen Kühlvorrichtungssysteme bestehen jedoch alle überwiegend aus einer an der Kühleinheit angeflanschten Filtereinheit oder an Kühleinheiten angeschlossenen Tankeinheiten, wobei die jeweilige Tankeinheit dann das Filterelement aufnimmt. Die bekannten Kühlvorrichtungen sind demgemäß aus mehreren Bauteilen zusammengesetzt, wobei die eigenständige Kühleinheit über eine entsprechende Verrohrung mit der eigenständigen Filtereinheit unter Herstellen der Kühlvorrichtung miteinander zu verbinden sind. Aufgrund der angesprochenen Verrohrung kommt es beim Transport des Fluids zu strömungsbedingten Verlusten, was einem energetisch günstigen Betrieb der bekannten Kühlvorrichtung entgegensteht. Auch ist nicht auszuschließen, dass es im Bereich der Verrohrung zu Undichtigkeiten kommt, was die Funktionssicherheit beeinträchtigt.

Durch die DE 196 35 777 A ist eine Kühlvorrichtung bekannt mit einer von einem zu kühlenden Fluid durchströmbaren Kühleinheit und mit einer Filtereinheit für die Filtration des Fluids, wobei die Kühleinheit und die Filtereinheit einstückig miteinander verbunden sind und wobei die Filtereinheit zusammen mit der Kühleinheit in einem Vorrichtungsgehäuse angeordnet ist. Durch das dahingehende Dokument ist es auch bekannt, als Kühleinheit einen plattenförmigen Lamellenkühler einzusetzen und das Filterelement ist in einem Filtergehäuse bei der bekannten Lösung derart aufgenommen, dass dieses integraler Bestandteil des Vorrichtungsgehäuses ist.

Durch die US-A-5 159 821 ist darüber hinaus eine Kühlvorrichtung bekannt mit einer in axialer Richtung klein aufbauenden Filterscheibe als Filterelement, das in einem Vorrichtungsgehäuse angeordnet auch einen plattenförmigen Lamellenkühler als Kühleinheit aufnimmt. In Fluidrichtung vor dem Filterelement erstreckt sich innerhalb des Vorrichtungsgehäuses ein Trockungsmedium, wobei die Filterelementscheibe, die dem Lamellenkühler an dessen einer Längsseite vorgeschaltet ist, dort nur eine geringe Einbaulänge einnimmt. Auch bei diesen bekannten Lösungen kommt es zu Strömungsverlusten beim Betrieb der Filtervorrichtung, was zu einem geringen Filterwirkungsgrad führen kann. Auch läßt sich teilweise nur sehr schwer ein verbrauchtes Filterelement gegen ein Neuelement austauschen.

Durch die EP 1 261 809 B1 und die DE 100 09 864 A1 ist jeweils eine Kühlvorrichtung bekannt mit einer von einem zu kühlenden Fluid, insbesondere Hydrauliköl, durchströmbaren Kühleinheit und mit einer Filtereinheit für die Filtration des Fluids, wobei die Kühleinheit und die Filtereinheit einstückig miteinander verbunden sind, die zusammen mit der Kühleinheit in einem Vorrichtungsgehäuse angeordnet ist, wobei die Kühleinheit als plattenförmiger Lamellenkühler die anstehenden Kühlaufgaben wahrnimmt. Die Filtereinheit ist in Strömungsrichtung des zu kühlenden Fluids vor dem plattenförmigen Lamellenkühler angeordnet, was den Vorteil hat, dass etwaig auftretende Verschmutzungen aus dem Fluidstrom herausfiltriert die sichere Funktion der Kühleinheit nicht beeinträchtigen können. Bei der bekannten Lösung erstreckt sich die Filtereinheit im wesentlichen entlang der einen Längsseite des Lamellenkühlers, wobei zwischen Filtereinheit und Kühleinheit ein Fluid-Sammelraum geschaltet ist. Der dahingehende Fluid-Sammelraum weist unterschiedliche Querschnittsflächen auf, insbesondere verbreitert sich der Querschnitt in Richtung der Bodenseite der Kühlvorrichtung, so dass sich ungünstige Strömungsverhältnisse einstellen können mit Kavitätsbildung, was für einen ungestörten energiesparenden Betrieb der bekannten Kühlvorrichtung nachteilig ist und insbesondere hat es sich gezeigt, dass bei sehr kleinen Strömungsgeschwindigkeiten des Fluids die Verteilung desselbigen vom Fluid-Sammelraum aus zur Kühleinheit zu ungleichförmigen Verteilsituationen führt, was eine wirksame Kühlung des Fluids beeinträchtigt. Auch ist insofern die bekannte Lösung teuer und aufwendig in der Herstellung.

Durch die DE 103 38 527 A1 ist ein Kältemittelkondensator bekannt, bestehend aus einem Rohr/Rippen-Block und beiderseits angeordneten Sammelrohren sowie aus einem parallel zu einem Sammelrohr angeordneten Sammler mit aufgenommener Trockner/Filtereinheit, welcher über Überströmöffnungen mit dem Sammelrohr in Kältemittelverbindung steht. Bei einer bevorzugten Ausführungsform der bekannten Lösung ist vorgeschlagen, dass der Sammler als einstückiges Rohr ausgebildet ist.

Bei einem Kondensator mit integriertem Aufnahmebehälter nach der DE 100 10 534 A1 ist ein Überkühlungsbereich zum Kühlen von flüssigem Kühl- bzw. Kältemittel einer Aufnahmeeinheit zwischen einem ersten und einem zweiten Kondensationsbereich in einem Kernbereich in vertikaler Richtung angeordnet. Hierbei wird bei Leerlauf des Motors sogar dann, wenn Hochtemperaturluft, die durch den Kondensator mit integriertem Aufnahmebehälter hindurchgetreten ist, wieder in Richtung zu der luftstromaufwärtigen Seite durch die untere Seite des Kondensators mit integriertem Aufnahmebehälter hindurch eingeführt wird, die Hochtemperaturluft nicht in Richtung zu der Anordnungsposition des Überkühlungsbereichs eingeführt, weil der Überkühlungsbereich an der oberen Seite von dem zweiten Kondensationsbereich angeordnet ist. Somit ist bei der bekannten Lösung bei einem Leerlauf des Motors verhindert, dass die Leistung der Überkühlung in den Überkühlungsbereich des Kernbereiches herabgesetzt ist.

Ausgehend von diesem Stand der Technik liegt der Erfindung die Aufgabe zugrunde, die bekannten Kühlvorrichtungen dahingehend weiter zu verbessern, dass diese insgesamt einen verbesserten Betrieb ermöglichen, insbesondere auch bei geringen Fluidgeschwindigkeiten. Eine dahingehende Aufgabe löst eine Kühlvorrichtung mit den Merkmalen des Patentanspruches 1 in seiner Gesamtheit.

Dadurch, dass der Fluid-Sammelraum einen gleichförmigen Durchströmungsquerschnitt aufweist und zumindest teilweise von einer konkav gekrümmten Begrenzungswand gegenüber der Filtereinheit abgeschlossen ist, ist eine optimierte Fluidführung erreicht, die zu einer Vergleichmäßigung des Geschwindigkeitsverlaufs führt unter Vermeidung von Kavitäten und Turbulenzen, so dass insoweit ein störungsfreier, energetisch günstiger Betrieb mit der erfindungsgemäßen Kühlvorrichtung möglich ist.

Insbesondere läßt sich der freie Fluidquerschnitt in dem Fluid-Sammelraum an die freien Durchströmquerschnitte im Bereich der Filtereinheit anpassen, wobei vorgesehen ist, dass der Fluid-Sammelraum im Querschnitt halbkreisförmig ausgebildet ist, wobei die Filtereinheit ein Filterelement aufweist, das in einem Filtergehäuse mit einem zylindrischen Einbauraum aufgenommen ist. Somit lassen sich die freien Durchströmungsquerschnitte innerhalb des Filtergehäuses im Fluid-Sammelraum aufgreifen und beibehalten, so dass trotz umgelenkter Strömungen im Bereich des Überganges zwischen Filtergehäuse und Fluid-Sammelraum ein weitgehend störungsfreier Fluidtransport erreicht ist.

Der Fluid-Sammelraum weist mittig eine weitere Begrenzungswand aufweist, die den Fluid-Sammelraum in zwei Teilräume unterteilt, von denen einer eine Fluidverbindung mit dem Filtergehäuse aufweist und der andere einen Auslauf hat für die Abfuhr von gefiltertem und gekühltem Fluid. Aufgrund der weiteren Begrenzungswand im Fluid-Sammelraum läßt sich der Fluidstrom aufteilen, wobei der eine Teilstrom zunächst von der Filtereinheit kommend einem Teil der Kühleinheit zugeführt wird, der in Umkehrrichtung und gekühlt durch den anderen Teil der Kühleinheit erneut in den durch die weitere Begrenzungswand abgegrenzten Teilraum des Fluid-Sammelraumes eintritt, um von dort die Kühlvorrichtung filtriert und gekühlt zu verlassen. Die dahingehende Anordnung ist besonders günstig bei zu führenden Fluidströmen mit geringer Geschwindigkeit. Durch die Aufteilung und bedingt durch die Trennung über die jeweilige Begrenzungswand sind insoweit die Kühl- und Transportleistungen "portionierbar", was mit den bekannten, beschriebenen Lösungen nicht erreichbar ist.

Weitere vorteilhafte Ausführungsformen der erfindungsgemäßen Kühlvorrichtung sind Gegenstand der sonstigen Unteransprüche.

Im folgenden wird die erfindungsgemäße Kühlvorrichtung anhand eines Ausführungsbeispiels nach der Zeichnung näher erläutert. Dabei zeigen in prinzipieller und nicht maßstäblicher Darstellung die
- Fig.1: teilweise im Längsschnitt, teilweise in perspektivischer Draufsicht die Kühlvorrichtung als Ganzes;
- Fig.2: den in Blickrichtung auf die Fig.1 gesehen links angeordneten Gehäuseaufbau von Filtergehäuse und Fluid-Sammelraum ohne eingesetztes Filterelement.

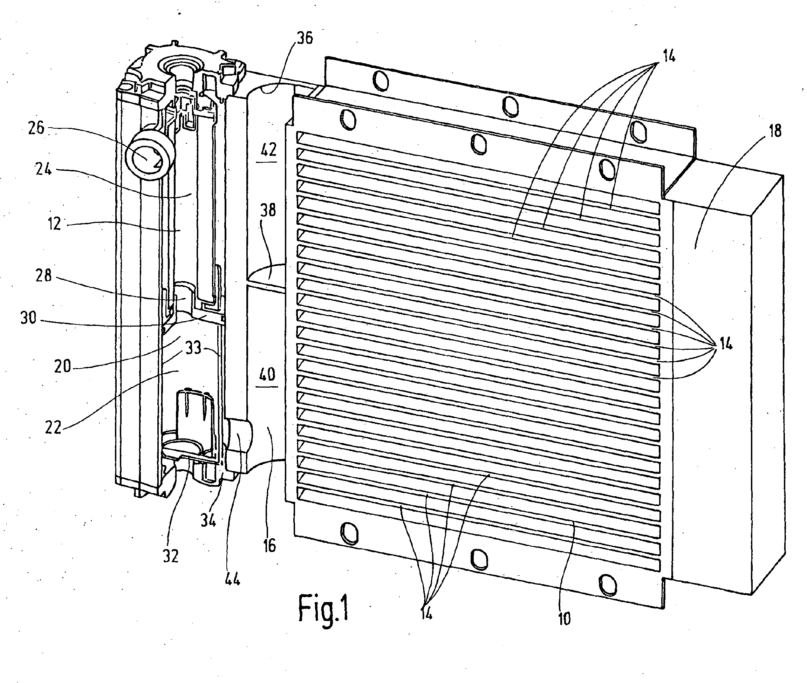

Die in den Figuren gezeigte Kühlvorrichtung weist eine von einem zu kühlenden Fluid, insbesondere Hydrauliköl, durchströmbare Kühleinheit 10 auf sowie eine Filtereinheit 12 für die Filtration des dahingehenden Fluids. Die Kühleinheit 10 ist als plattenförmiger Lamellenkühler ausgeführt, d.h. zur Kühlluftführung weist der Plattenkühler zickzackförmig aufgefaltete Lamellen (nicht dargestellt) auf, die zwischen sich Fluid-Leitkanäle 14 begrenzen, die dem Transport des zu kühlenden Fluids dienen. Die Luftführungsrichtung durch die Kühleinheit 10 verläuft senkrecht zu der Bildebene der Fig.1 und die Fluid-Transportrichtung quer dazu also innerhalb der Bildebene. Ferner münden die übereinander angeordneten Fluid-Leitkanäle 14 beidseitig in Fluid-Sammelräume 16,18 ein. Der Aufbau dahingehender Lamellenkühler ist allgemein üblich, so dass an dieser Stelle hierauf nicht mehr näher eingegangen wird. Das Vorrichtungsgehäuse der Kühleinheit 10 kann aus einem Aluminiumgußteil od. dgl. bestehen; es läßt sich jedoch auch, konventionell aus Blechteilen kastenförmig zusammensetzen und zu einem Gesamtgehäuse über Schweißnahtverbindungen zusammenfügen. Der einfacheren Darstellung wegen sind die obere und die untere Abschlußwand für den Sammelraum 16 nicht dargesteilt.

In Blickrichtung auf die Fig. 1 gesehen erstreckt sich die Filtereinheit 12 an der linken Längsseite der Kühleinheit 10 und die Filtereinheit 12 weist ein Filtergehäuse 20 auf mit einem mittig liegenden zylindrischen Einbauraum 22 für die Aufnahme eines zylindrischen Filterelementes 24 üblicher Bauart. Ein dahingehendes Filterelement 24 ist aus üblichen Filtrationsmaterialien aufgebaut und besteht beispielsweise aus einer plissierten, hohlzylindrischen, mehrlagigen Filtermatte, die ein mittiges, nicht näher dargestelltes Stützrohr umgibt. In Blickrichtung auf die Fig. 1 gesehen, weist das Filtergehäuse 20 in seinem oberen Endbereich einen Zulauf 26 auf für zumindest teilweise verschmutztes und erwärmtes Fluid. Das derart über den Zulauf 26 zugeführte Fluid durchströmt das Filterelement 24 von außen nach innen und das abfiltrierte Fluid wird durch eine Bodenauslaßöffnung 28 einer Distanzlage 30 mittig aus dem Filterelement 24 abgeführt. Die dahingehende Distanzlage 30 stützt sich an einer bügel- oder käfigartigen Halteeinheit 32 mit einzelnen Haltestäben 33 ab, die sich wiederum an einem Bodenteil 34 des Filtergehäuses 20 abstützt. Das dahingehende Bodenteil 34 kann fluiddicht die Filtereinheit 12 nach unten hin, also bodenseitig abschließen; kann aber auch der Aufnahme eines nicht näher dargestellten Bypassventils dienen, um beispielsweise verschmutztes Fluid abgereinigt durch die Filtereinheit 12 nicht der Kühleinheit 10 zu Kühlzwecken zuzuführen, sondern aus der Vorrichtung abzuleiten, was beispielsweise dann sinnvoll sein kann, wenn die Temperatur des abfiltrierten Fluids eine Kühlung noch nicht oder nur partiell notwendig macht.

Mittels der Halteeinheit 32 sowie der Distanzlage 30 ist es möglich, in ein- und dieselbe Kühlvorrichtung von der Einbaulänge her unterschiedliche Filterelemente 24 einzusetzen, um dergestalt variierenden Filtrationsaufgaben in der Praxis gerecht zu werden. Vorzugsweise ist jedoch, wie die Darstellung nach der Fig.1 zeigt, die Baulänge des Filterelementes 24 derart gewählt, dass in axialer Richtung nur in etwa die Hälfte des Einbauraumes 22 des Filtergehäuses 20 verbraucht ist, so dass insoweit unterhalb des Filterelementes 24 ein zylindrischer Aufnahmeraum entsteht, der zur Vergleichmäßigung des Fluidstromes im Filtergehäuse 20 nach der Filtration mit beiträgt.

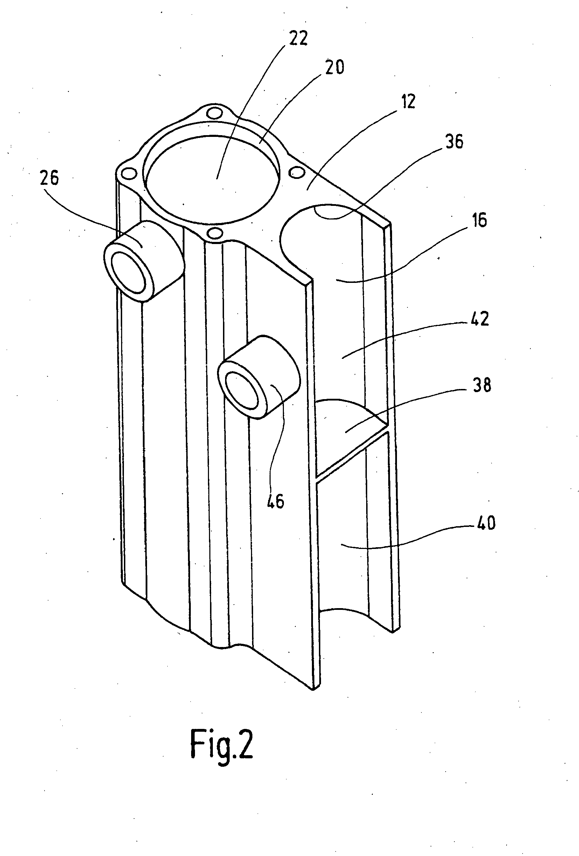

Wie des weiteren die Fig.1 zeigt, ist zwischen Filtereinheit 12 und Kühleinheit 10 der erste Fluid-Sammelraum 26 angeordnet, dessen axiale Erstrekkungslänge nach den Anschlußmöglichkeiten auf der Längsseite des Lamellenkühlers als Kühleinheit 10 angepaßt ist. Der dahingehende Fluid-Sammelraum 16 weist einen gleichförmigen Durchströmungsquerschnitt auf und ist von einer konkav gekrümmten Begrenzungswand 36 gegenüber der Filtereinheit 12 abgeschlossen. Die dahingehenden Verhältnisse sind insbesondere in der Fig.2 verdeutlicht wiedergegeben. Dergestalt ist für den Fluid-Sammelraum 26 eine Art Halbkreisröhre gebildet, die mit ihrem flachen Anschlußquerschnitt an der Stirnseite des Lamellenkühlers angreift.

Vorzugsweise weist der weitere oder zweite Fluid-Sammelraum 18 auf der gegenüberliegenden Längsseite des Lamellenkühlers eine vergleichbare Halbröhrenstruktur auf; es besteht hier aber auch die Möglichkeit, einen anderen, insbesondere quadratischen Querschnitt zu wählen. Weiter ist vorgesehen, dass der Fluid-Sammelraum 18 durchgehend Anschlußmöglichkeiten an die Fluid-Leitkanäle 14 der Kühleinheit 10 aufweist. Bei der in den Figuren gezeigten Ausführungsform ist der Fluid-Sammelraum 16 in etwa mittig von einer weiteren Begrenzungswand 38 unterteilt, die den Fluid-Sammelraum 16 in zwei Teilräume 40,42 fluiddicht auftrennt.

Zur Versorgung des unteren Teilraumes 40 dient eine Querdurchlaßstelle 44, vorzugsweise in Form einer Bohrung, die fluidführend den Teilraum 40 mit dem Inneren des Filtergehäuses 20, insbesondere mit dem Einbauraum 22, für das Filterelement 24 verbindet. Dergestalt filtriertes Fluid wird somit über die Querdurchlaßstelle 44 in den Teilraum 40 eingeführt und durchströmt dann von links nach rechts die Fluid-Leitkanäle 14, wobei eine Kühlung durch die Kühleinheit 10 in deren unterem hälftigen Bereich veranlaßt ist. Das derart gekühlte Fluid oder Medium tritt dann in den weiteren Fluid-Sammelraum 18 ein, steigt in Blickrichtung auf die Fig.1 gesehen nach oben hin auf und durchquert dann von rechts nach links die Fluid-Leitkanäle 14 im oberen Bereich, insbesondere in der oberen Hälfte der Kühleinheit 10. Das derart dann vollständig abgekühlte Fluidmedium tritt in den zweiten oder oberen Teilraum 42 ein und von dort verläßt das derart abfiltrierte und gekühlte Fluid die Fluidvorrichtung über den Auslauf 46, der dieselbe Achsrichtung aufweist wie der Zulauf 26 (vgl. Teildarstellung nach der Fig.2).

Durch die derart beschriebene Anordnung ist eine weitestgehende Vergleichmäßigung des Fluidstromes sowohl in der Filtereinheit 12 als auch in der Kühleinheit 10 erreicht sowie in den beiden Fluid-Sammelräumen 16,18. Insbesondere langsam strömendes Fluid läßt sich dergestalt störungsfrei filtrieren und kühlen und aufgrund der konstant beibehaltenen Querschnittsverläufe ist ein energetisch günstiger Filtrier- und Kühlbetrieb mit der erfindungsgemäßen Kühlvorrichtung möglich. Wie insbesondere die Fig.2 zeigt, läßt sich die Filtereinheit 12 mit dem Fluid-Sammelraum 16 einstückig, beispielsweise in Form eines Druckgußteils, herstellen, um die derart dann hergestellte Baueinheit mittels eines üblichen Schweißverfahrens mit der sonstigen Kühleinheit 10 an deren einer Stirnseite fluiddicht anzuschließen. Mit der erfindungsgemäßen Kühlvorrichtung ist eine sehr kompakt aufbauende Einheit gegeben, die flexibel an verschiedene Filtrier- und Kühlaufgaben anpaßbar ist, ohne dass der grundsätzliche Aufbau der Kühlvorrichtung zu ändern wäre, was Kosten sparen hilft. Im übrigen ist die erfindungsgemäße Kühlvorrichtung wartungs- und montagefreundlich, was wiederum Kosten sparen hilft.

## Patentansprüche

1. Kühlvorrichtung mit einer von einem zu kühlenden Fluid, insbesondere Hydrauliköl, durchströmbaren Kühleinheit (10) und mit einer Filtereinheit (12) für die Filtration des Fluids, wobei die Filtereinheit (12) sich an einer Längsseite der Kühleinheit (10) erstreckt und zwischen Filtereinheit (12) und Kühleinheit (10) ist ein Fluid-Sammelraum (16) angeordnet, wobei der Fluid-Sammelraum (16) einen gleichförmigen Durchströmungsquerschnitt aufweist und zumindest teilweise von einer konkav gekrümmten Begrenzungswand (36) gegenüber der Filtereinheit (12) abgeschlossen ist, wobei der Fluid-Sammelraum (16) im Querschnitt halbkreisförmig ausgebildet ist, wobei die Filtereinheit (12) ein Filterelement (24) aufweist, das in einem Filtergehäuse (20) mit einem zylindrischen Einbauraum (22) aufgenommen ist, wobei der Fluid-Sammelraum (16) mittig eine weitere Begrenzungswand (38) aufweist, die den Fluid-Sammelraum (16) in zwei Teilräume (40,42) unterteilt, von denen einer (40) eine Fluidverbindung (44) mit dem Filtergehäuse (20) aufweist und der andere (42) einen Auslauf (26) hat für die Abfuhr von gefiltertem und gekühltem Fluid, und wobei das Filtergehäuse (20) zusammen mit dem Fluid-Sammelraum (16) eine einstückige Baueinheit bildet, die mit der Kühleinheit (10) als weiterer Baueinheit verbindbar ist.

2. Kühlvorrichtung nach Anspruch 1, **dadurch gekennzeichnet, dass** die Einbaulänge des Filterelementes (24) im Filtergehäuse (20) in etwa dem Abstand der weiteren Begrenzungswand (38) der beiden Teilräume (40,42) von deren Enden her entspricht.

3. Kühlvorrichtung nach Anspruch 1 oder 2, **dadurch gekennzeichnet, dass** auf der der Filtereinheit (12) gegenüberliegenden Längsseite der Kühleinheit (10) ein weiterer Fluid-Sammelraum (18) angeordnet ist.

4. Kühlvorrichtung nach einem der Ansprüche 1 bis 3, **dadurch gekennzeichnet, dass** das Filterelement (24) sich innerhalb des Filtergehäuses (20) an einer Distanzlage (30) abstützt, die von einer Halteeinheit (32) gehalten ist, die sich wiederum am Bodenteil (34) des Filtergehäuses (20) abstützt.

## Claims

1. A cooling device with a cooling unit (10) through which a fluid to be cooled, in particular hydraulic oil, can flow, and with a filter unit (12) for filtration of the fluid, the filter unit (12) extending on one long side of the cooling unit (10) and a fluid collecting chamber (16) being located between the filter unit (12) and the cooling unit (10), the fluid collecting chamber (16) having a uniform flow cross-section and being closed off from the filter unit (12) at least partially by a concavely curved boundary wall (36), the fluid collecting chamber (16) being made semicircular in cross-section, the filter unit (12) having a filter element (24) which is held in a filter housing (20) with a cylindrical installation space (22), the fluid collecting chamber (16) having in the middle another boundary wall (38) which sub-divides the fluid collecting chamber (16) into two partial spaces (40, 42) one of which (40) has a fluid connection (44) to the filter housing (20) and the other (42) has an outlet (26) for the discharge of filtered and cooled fluid, and the filter housing (20) together with the fluid collecting chamber (16) forming a one-piece unit which can be connected to the cooling unit (10) as another unit.

2. The cooling device according to Claim 1, **characterised in that** the overall length of the filter element (24) in the filter housing (20) corresponds roughly to the distance of the other boundary wall (38) of the two partial spaces (40, 42) from their ends.

3. The cooling device according to Claim 1 or 2, **characterised in that** there is another fluid collecting chamber (18) on the long side of the cooling unit (10) opposite the filter unit (12).

4. The cooling device according to any of Claims 1 to 3, **characterised in that** the filter element (24) is supported within the filter housing (20) on a spacer layer (30) which is held by a holding unit (32) which is in turn supported on the bottom part (34) of the filter housing (20).

## Revendications

1. Dispositif de refroidissement ayant un groupe (10) de refroidissement pouvant être parcouru par un fluide à refroidir, notamment par de l'huile hydraulique, et un groupe (12) de filtration pour la filtration du fluide, le groupe (12) de filtration s'étendant sur un grand côté du groupe (10) de refroidissement et un espace (16) collecteur de fluide étant disposé entre le groupe (12) de filtration et le groupe (10) de refroidissement, l'espace (16) collecteur de fluide ayant une section transversale de passage uniforme et étant fermé par rapport au groupe (12) de filtration, au moins en partie, par une paroi (36) de démarcation concave, l'espace (16) collecteur de fluide ayant en section transversale la forme d'un demi-cercle, l'unité (12) de filtration ayant un élément (24) filtrant, qui est logé dans une enveloppe (20) de filtre ayant un espace (22) cylindrique de montage, l'espace (16) collecteur de fluide ayant au milieu une autre paroi (38) de démarcation qui subdivise l'espace (16) collecteur de fluide en deux sous-espaces (40, 42), dont l'un (40) a une communication (44) fluidique avec l'enveloppe (20) de filtre, et dont l'autre (42) a une sortie (26) pour l'évacuation de fluide filtré et refroidi, et dans lequel l'enveloppe (20) de filtre forme, ensemble avec l'espace (16) collecteur de fluide, une unité de construction d'un seul tenant, qui peut être reliée au groupe (10) de refroidissement en tant qu'autre unité de construction.

2. Dispositif de refroidissement suivant la revendication 1, **caractérisé en ce que** la longueur de montage de l'élément (24) filtrant dans l'enveloppe (20) du filtre correspond à peu près à la distance de l'autre paroi (38) de démarcation des deux sous-espaces (40, 42) à leurs extrémités.

3. Dispositif de refroidissement suivant la revendication 1 ou 2, **caractérisé en ce qu'**un autre espace (18) collecteur de fluide est disposé du grand côté, opposé au groupe (12) de filtration, du groupe (10) de refroidissement.

4. Dispositif de refroidissement suivant l'une des revendications 1 à 3, **caractérisé en ce que** l'élément (24) filtrant s'appuie à l'intérieur de l'enveloppe (20) du filtre sur une couche (30) d'entretoisement, qui est maintenue par une unité (32) de maintien s'appuyant à son tour sur la partie (34) de fond de l'enveloppe (20) du filtre.
